(19) Europäisches Patentamt
European Patent Office
Office européen des brevets

(11) **EP 1 901 033 B1**

(12) **EUROPÄISCHE PATENTSCHRIFT**

(45) Veröffentlichungstag und Bekanntmachung des Hinweises auf die Patenterteilung:
**17.01.2018   Patentblatt 2018/03**

(51) Int Cl.:
***G01B 11/25*** *(2006.01)*

(21) Anmeldenummer: **06450127.3**

(22) Anmeldetag: **12.09.2006**

(54) **Vorrichtung und Verfahren zur mobilen berührungslosen Erfassung, sowie Ermittlung und Auswertung von Körper-Konturen**

Apparatus and method for mobile contactless measurement, determination and evaluation of body contours

Dispositif et procédé pour la mesure mobile sans contact, la determination et l'analyse de contours de corps

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**19.03.2008   Patentblatt 2008/12**

(73) Patentinhaber: **Joanneum Research Forschungsgesellschaft mbH**
**8010 Graz (AT)**

(72) Erfinder:
 • **Niel, Albert**
 **8047 Graz (AT)**

 • **Gasser, Clemens**
 **A-8045 Graz (AT)**
 • **Deutschl, Edwin**
 **8010 Graz (AT)**

(74) Vertreter: **Schwarz & Partner Patentanwälte OG**
**Patentanwälte**
**Wipplingerstraße 30**
**1010 Wien (AT)**

(56) Entgegenhaltungen:
**EP-A1- 1 111 334      US-A1- 5 886 775**
**US-A1- 2003 160 974      US-B1- 6 330 523**
**US-B1- 6 556 307**

EP 1 901 033 B1

**Beschreibung**

Die vorliegende Erfindung betrifft ein Verfahren zum berührungslosen Erfassen zumindest eines Teils einer in einer Vorzugsschnittfläche liegenden Kontur eines Körpers innerhalb eines vorbestimmten Messbereiches des Körpers welcher Körper eine bekannte geometrische Gesetzmäßigkeit in einer Raumrichtung aufweist, die nicht in der Vorzugsschnittfläche liegt, vorzugsweise senkrecht zur Vorzugsschnittfläche gerichtet ist, insbesondere zum Erfassen eines Teils eines Querschnitts eines Körpers.

Für die Qualitätssicherung von industriell gefertigten Produkten mit vorgegebener Körperform sowie zur Inspektion von mit Verschleiß behafteten Bauteilen, Gussformen oder dergleichen werden in der Industrie oder Fahrzeugtechnik stationäre Prüfstände zur Erfassung von Norm-Abweichungen oder Veränderungen eingesetzt. Dazu dienen z.B. topometrische Messverfahren. Dabei werden Körper mechanisch mit Tastspitzen-Sonden abgetastet (taktiles Messverfahren oder Tastschnittverfahren) oder durch berührungslose optische Prüf-Verfahren zwei- und dreidimensional erfasst. Auch findet man häufig manuelle Inspektionsverfahren mithilfe von Schiebelehren oder Mess-Schiebern (mechanisch oder elektronisch).

Als Messobjekte dienen Formkörper, vorzugsweise aus biologischen, keramischen, metallischen oder Kunststoff-Materialien. Häufig gemessene Formen sind Zylinderprofile oder rotationssymmetrische Profile. Hauptanwendungen der bekannten Verfahren sind Vermessung von Zahnersatz, Prothesen, Scheiben, Walzen, Rädern, Kolben, Bolzen, Schrauben, Innen- und Außengewinden, Schlüsselrohlingen, Rohren, Reifen, Kugeln, Profilleisten, Schienen, Gehäuseteilen, Formgussteilen, aber auch Oberflächenstrukturen oder Schichtdicken. Mechanische Abtastverfahren zur Konturkontrolle wurden bereits nach Entwicklung der Lasertechnik durch optische Verfahren ergänzt.

Zu den optischen Konturerfassungs-Geräten gehören solche, die nach dem Schattenwurfprinzip arbeiten, und solche, die das Lichtschnittverfahren einsetzen. Vorrichtungen, die nach diesen Verfahren arbeiten, sind auf Messtische oder stationäre Messaufbauten mit exakt justierten Anordnungen von Bilderfassungs- und Strahl-Erzeugungseinheiten angewiesen. Wesentlich ist hierbei eine starre und exakte Zuordnung zwischen dem zu vermessenden Körper und der Messeinrichtung.

Grundlage dieser Verfahren ist die Triangulation jedes Körperkontur-Punktes. Beim Laser-Lichtschnittverfahren dient ein linienförmiges Laserlichtband zur Beleuchtung einer ausgewählten Konturlinie eines Messkörpers, und zwar in der Lichtschnittebene, und eine lichtempfindliche Sensorfläche (vorzugsweise ein CMOS oder CCD-Video-Sensor mit n mal m Bildpunkten) zur Erfassung des Reflexionslichtes von einer zur Strahlenachse des Laserlichtes bzw. der Lichtschnittebene versetzten Position.

Die trigonometrischen Beziehungen der Winkel der Messdreiecke zwischen Lichtquelle, Reflexionspunkten und Sensor und die Lage von Lichtquelle und Sensorfläche zueinander erlaubt die dreidimensionale Berechnung der Konturlinien-Koordinaten. So wird das Lichtband, das auf eine ebene Fläche fällt, als Gerade auf der Sensorfläche abgebildet, Krümmungen oder Wölbungen als Kurven, Knicke als Winkel.

Zur exakten Positionserfassung existieren Vorrichtungen in Verbindung mit einem Messtisch, auf welchem entweder mehrere ortsfest angeordnete optische Systeme vorgesehen sind, oder die mit einem durch einen Schwenkarm beweglichen optischen System ausgestattet sind. Daneben existieren Vorrichtungen zum relativen transversalen Bewegen des zu vermessenden Körpers gegenüber der Messeinrichtung in definierten Schrittweiten in einem Koordinatensystem (kartesisch oder zylindrisch) sowie Vorrichtungen zum Drehen um mindestens eine Achse um definierte Schrittwinkel. Mehrere optische Systeme oder aber kalibrierte Bewegungseinrichtungen für den zu vermessenden Körper oder für das Mess-System sind notwendig, um auch jene Bereiche zu erfassen, die bei nur einseitiger Bestrahlung abgeschattet sind.

In der DE 199 26 439 C1 ist ein Verfahren zur berührungslosen dreidimensionalen Vermessung von Körpern mit einem Drehtisch und einem optischen Triangulationssensor beschrieben.

Die DE 102 56 122 erläutert eine am Schienenfahrzeug befestigte Einrichtung zur Ermittlung wenigstens einer Zustandsgröße einer Rad-Schienen-Paarung mittels Lichtschnittverfahren.

Die DE 103 01 903 handelt von einem Verfahren zur räumlichen Vermessung eigenbewegter Objekte mittels aktiver Triangulation, z.B. zum Vermessen von Fingerkuppen.

In der US 6,768,551 ist eine stationäre Messeinrichtung an Geleisen zur berührungslosen Erfassung von Radverschleiß an Schienenfahrzeugen abgehandelt.

Nachteilig an existierenden Körperkontur-Erfassungsgeräten ist die starre örtliche Zuordnung der Geräte zu den zu vermessenden Körpern, die zudem für die trigonometrische Ausweitung sehr genau auf ein bestimmtes Maß eingestellt sein muss. Weiters sind der relativ große stationäre Messaufbau mit kalibrierten, geeichten Messtischen oder Messplätzen mit fixen oder in Grenzen veränderbaren Abmessungen des Messgut-Aufnahmeraumes, die lange Messdauer und lange Verarbeitungszeiten sowie die Empfindlichkeit des Messvorganges gegenüber Vibrationen und Erschütterungen nachteilig. Die Erfassung von Profilen im "verbauten" Zustand, im Betrieb, unter Materialbelastung oder in Bewegung ist schwer oder oft gar nicht möglich. Die Konturmessgeräte sind meist auf bestimmte Produkte hin konzipiert, groß und unhandlich. Meist sind Messaufbauten mit Datenverarbeitungsanlagen (Stand-Computer) verbunden und verlangen messtechnische Grundkenntnis und ausreichende Bedienkenntnisse für die Steuerungssoftware. Einrichtung und Justage sind oft langwierig. Dazu ist regelmäßige Wartung und Kontrolle der motorisch gesteuerten Teile, wie Spindeln und anderer Positioniervorrichtungen, erforderlich.

Die US 2003/0160 974 A1 zeigt ein Verfahren zum Vermessen von Kreiszylindern als bekannt, bei dem der Kreiszylinder mit einer von einer vom Kreiszylinder ortsunabhängigen Strahlenquelle erzeugten Strahlenfläche unter Erzeugung einer Strahlenschnittlinie an der Oberfläche des Körpers anvisiert wird und die Schnittlinie mittels einer Kamera erfasst wird. Hierbei werden Extremwerte der Koordinaten von drei speziellen Punkten vermessen und daraus der Radius des Kreiszylinders errechnet. Im Falle einer Schrägstellung der Strahlenschnittlinie lässt sich ein Messergebnis mit zwei oder mehr Strahlenflächen erzielen. Ein weiteres Verfahren zur optischen Vermessung von zylindrischen Körpern ist aus EP 1 111 334 A1 bekannt. Aus der US 6,542,249 B1 ist es bekannt, die Oberfläche eines Objekts berührungslos zu erfassen, wobei das Objekt mit drei von einer vom Objektort unabhängigen Strahlenquelle erzeugten Strahlenflächen unter Erzeugung jeweils einer Strahlenschnittlinie an der Oberfläches des Objekts anvisiert wird, wobei die Strahlenflächen in bekannter Raumorientierung zueinander stehen. Diese Strahlenschnittlinien werden von einer Kamera aufgenommen und es kann durch Interpolation auf die Objektoberfläche zwischen den Schnittlinien geschlossen werden. Durch mehrmaliges Anvisieren des Objekts und Zusammenfügen sämtlicher Messungen kann auf die dreidimensionale Oberfläche des Objekts geschlossen werden.

Aus der US 2001/0028025 A1 ist ein Lichtschnittsensor bekannt zum berührungslosen Ermitteln von Längendimensionen und Winkeln, wobei die Methode der Triangulation benutzt wird.

Weiterhin ist aus US 6,330,523 B1 ein Laserscanner zur dreidimensionalen Erfassung der Oberfläche von Körpern bekannt. Dieser wird vor der eigentlichen Messung ortsfest positioniert und justiert. Die Erfindung stellt sich die Aufgabe, ein Verfahren der eingangs beschriebenen Art zu schaffen, welches eine sehr schnelle und trotzdem exakte Vermessung der Oberfläche eines Körpers in einer Vorzugsschnittfläche, insbesondere seines Querschnitts gestatten, wobei länger dauernde Vorarbeiten, wie z.B. das genaue In-Position-Bringen des Messgerätes zum zu vermessenden Körper bzw. umgekehrt, vermieden werden können. Es soll weiters möglich sein, Körper an schwer zugänglichen Stellen, ohne deren Ausbau aus einem Verband mehrerer Körper zu erfordern, zu vermessen. Bei dem erfindungsgemäßen Verfahren ist der Körper ein sich bewegender und/oder unter Belastung stehender Körper.

Das erfindungsgemäße Verfahren enthält dabei unter Anderem die Kombination folgender Verfahrensschritte:

- Anvisieren des Körpers (2, 23) von Hand aus mit mindestens zwei von einer vom Körper ortsunabhängigen Strahlenquelle (111, 112) erzeugten Strahlenflächen (115, 116) unter Erzeugen jeweils einer Strahlenschnittlinie (210, 220) an der Oberfläche des Körpers (2, 23) in dem vorbestimmten Messbereich,
- welche Strahlenflächen (115, 116) in bekannter Raumorientierung zueinander stehen,
- Anvisieren der Strahlenschnittlinien (210, 220) mittels eines Strahlendetektors (118), der zu den Strahlenflächen (115, 116) ebenfalls in einer bekannten Raumorientierung steht,
- worauf die vom Strahlendetektor (118) erfassten Schnittliniendaten zur Errechnung der in der gewünschten Vorzugsschnittfläche (20) liegenden Kontur (200, 201) verwertet werden,
- wobei die im Messbereich des Körpers (2, 23) auftretende Gesetzmäßigkeit seiner Oberfläche bei der Errechnung der in der gewünschten Vorzugsschnittfläche liegenden Kontur (200, 201) berücksichtigt wird.

Die genauen Merkmale des erfindungsgemäßen Verfahrens sind im unabhängigen Anspruch 1 definiert. Bevorzugte Ausführungen sind in den abhängigen Ansprüchen 2 bis 9 definiert.

Wesentlich für die Erfindung ist, dass die beiden Strahlenflächen und der Strahlendetektor in einer bekannten Raumorientierung zueinander stehen, was die Errechnung der in der gewünschten Vorzugsschnittfläche liegenden Kontur erst ermöglicht, und wodurch sowohl die Strahlenflächen als auch der Strahlendetektor in keiner wie immer gearteten bekannten Zuordnung zum zu vermessenden Körper stehen müssen. Dadurch ist es möglich, die mindestens eine Strahlenquelle und den Strahlendetektor zu einer Vorrichtung zusammenzufassen und mit dieser Vorrichtung den zu vermessenden Körper von Hand aus anzuvisieren, wobei man nicht an eine speziell gerichtete und exakt einzuhaltende Anvisierung gezwungen ist.

Die Bestimmung der Kontur in der Vorzugsschnittfläche erfolgt rechnerisch mit Hilfe von Trigonometrie.

Vorzugsweise sind die Strahlenflächen als Ebenen ausgebildet.

Als Strahlenquelle dient zweckmäßig eine Lichtquelle, insbesondere eine Laser-Lichtquelle.

Zum Erfassen einer Kontur, welche in Folge von Verdeckungen oder zu großem Umfangswinkel nicht von einer Position erfasst werden kann, wird der Körper innerhalb des Messbereichs von zwei oder mehr Stellen im Raum anvisiert, welche Stellen durch Translation und/oder Rotation der Strahlenquelle entlang bzw. um den Körper erreicht werden. Die vom Strahlendetektor erfassten Schnittliniendaten werden unter gegenseitiger Orientierung unter Nutzung von Überlappungsbereichen an markanten Merkmalen der Strahlenschnittlinien zu einer Kontur rechnerisch mittels mathematischer Transformation zusammengefügt, wie durch eine Translation und/oder Rotation. In einem vorteilhaften Verfahren für die Errechnung der in der Vorzugsschnittfläche liegenden Kontur wird ein Algorithmus zur Berechnung und Speicherung räumlicher Datenwerte (Datentripel, Punktvektoren im 3D-Raum) der Strahlenschnittlinien aus den Positionen von digitalisierten zweidimensionalen Abbildern der Konturteile auf einer Sensorfläche des Strahlendetektors mit n · m Pixel und den Konturpositionen mithilfe eines Mikroprozessors und den trigonometrischen Lage- und Winkelbeziehungen zwischen der optischen Achse des Strahlendetektors und den von den Strahlenflächen gebildeten Schnittflächen eingesetzt. Zweckmäßig wird ein Algorithmus zur Korrektur verzerrt erfasster Strahlenschnittlinien unter Verwendung von Kalibrierdaten eingesetzt, wobei vorzugsweise zuvor über einen Kalibriervorgang mithilfe eines Referenzkörpers Konturdaten erfasst und in einem Speichermedium als Referenzdaten gespeichert werden.

Weitere bevorzugte Rechenverfahren sind in den Ansprüchen 5 und 6 gekennzeichnet.

Zur Ermittlung von Teilkonturen ist das Laser-Lichtschnittverfahren besonders gut geeignet.

Vorteilhaft ist eine Anordnung mit einer Flächenkamera und einer Laservorrichtung mit einem optischen Aufsatz, der den Laserstrahl in zwei Lichtbänder (ausgedehnte Laserlinien) auffächert. Deren Orientierung ist idealer- aber nicht notwendigerweise etwa 30 - 60° zur optischen Achse der Flächenkamera und parallel zueinander. Durch Triangulation der reflektierten Lichtpunkte der zumindest anteilig diffus reflektierenden Oberfläche werden die bestrahlten (und nicht durch Erhebungen abgeschatteten) Konturteile in ihrer Position erfasst. Durch mindestens zwei Lichtschnitte kann eine relative Verdrehung oder Verkippung zwischen dem Messobjekt und den Laserebenen erfasst werden.

Die Formkenntnis oder die Kenntnis der Formeigenschaften, wie Symmetrie oder Zylinderform und dergleichen, erlaubt es, die nicht erfassten Schnittflächen-Konturteile zu berechnen. Zum Beispiel können zwei Lichtschnittkonturen eines Kreiszylinders zwei ebene Ellipsenabschnitte sein, deren Ebenen zueinander um einen Winkel geneigt sind, wobei der Winkel zwischen den Ebenen bekannt ist. Die Raumlage ist ebenfalls bekannt. Damit kann durch Drehen des Koordinatensystems in eine Lage parallel zum Hauptquerschnitt des Kreiszylinders und Projektion der Ellipsenabschnitte in die Hauptquerschnittsebene eine direkte Analyse des Querschnittes erfolgen. Bei Fehlerfreiheit ergibt sich ein Kreisabschnitt als Projektionskurve. Bei Abnützung kann eine Abweichung von einem idealen Kreisabschnitt sichtbar gemacht werden. Sind die beiden Ellipsenabschnitte unterschiedlich verändert, kann dies in der Projektion auf Veränderungen in Richtung der Zylinderachse hinweisen.

Allgemein betrachtet können die Strahlenflächen bzw. Lichtschnittebenen miteinander beliebige, aber bekannte und während des Messvorganges konstant einzuhaltende Winkel einschließen. Die Daten der Sensorfläche zeigen aufgrund der Optik ein reelles Abbild des Messobjekts, wobei die angestrahlten Körperkonturen aufgrund des Farb- oder Helligkeitswertes gefiltert werden können. Die zugeordneten Positionen auf der optischen Sensorfläche des Strahlendetektors stellen die perspektivisch verzerrten Abbilder der erfassten Konturteile dar und können durch einen Rechenalgorithmus mit Hilfe der trigonometrischen Zusammenhänge in die x, y, z Koordinatenwerte umgerechnet werden.

Dabei kann jeder Bildpunkt i von 1 bis n der Konturposition $(u_{i1}, v_{i1})$; $(u_{i2}, v_{i2})$, ... der bestrahlten Konturteile eindeutig in den durch die Koordinaten x, y, z gegebenen Bezugsraum umgerechnet werden. Für ebene Strahlflächen und ideale zentralprojektive Abbildungen gilt der Zusammenhang

$$S_1 \begin{bmatrix} x \\ y \\ z \\ 1 \end{bmatrix} = \underline{M}_1 \begin{bmatrix} u \\ v \\ 1 \end{bmatrix}; \quad S_2 \begin{bmatrix} x \\ y \\ z \\ 1 \end{bmatrix} = \underline{M}_2 \begin{bmatrix} u \\ v \\ 1 \end{bmatrix}; \dots$$

Die daraus errechneten Körperkonturteile $(x_{i1}, y_{i1}, z_{i1})$; $(x_{i2}, y_{i2}, z_{i2})$ ... mit einer Anzahl von n Punkten werden über eine Transformationsfunktion, welche aus den bekannten Objekteigenschaften und den errechneten Körperkonturteildaten selbst bestimmt wird, in den Vorzugsschnittflächenkonturteil $(x_i', y_i', z_i')$ umgerechnet. Für kegel- und zylinderförmige Objekte gilt beispielsweise:

$$S \begin{bmatrix} x' \\ y' \\ z' \\ 1 \end{bmatrix} = \underline{N} \begin{bmatrix} x_1 \\ y_1 \\ z_1 \\ 1 \end{bmatrix}$$

Vorteil dieses Verfahrens ist der einfache Aufbau, da keine exakte Anvisierung des Vorzugsquerschnittes erforderlich ist, die Ergebnisse aber durchaus ausreichend genau sind.

Gut geeignet für die Vorrichtung sind dem Stand der Technik entsprechende Laser-Lichtschnitt-Komponenten kompakter Bauform mit Laserliniengeneratoren und Flächenkamera.

So eignen sich besonders kohärente Lichtstrahlquellen (vorzugsweise Laser der Gruppen Festkörper-, Flüssig-, Gas-, Plasma-, Freielektronen- oder Halbleiter-(Dioden)Laser, beispielsweise ein Rubin- oder Neodym-Glas-Laser, ein Helium- oder ein $CO_2$-Laser oder vorzugsweise ein Gallium-Arsenid-Laser oder ein Gallium-Nitrid-Laser) mit Licht brechenden optischen Aufsätzen zur Auffächerung und Teilung des Strahlenbündels in Strahlenreihen, Strahlenbänder oder dergleichen. Auch können Spiegel, Prismen bewegt durch Bewegungseinrichtungen oder statisch zur Ablenkung verwendet werden. Linsen und Hohlspiegel sind zur Bündelung oder Kollimation vorgesehen. Auch holographisch bearbeitete Folien können zur Liniengeneration dienen.

Als Sensorfläche ist ein CCD- oder CMOS Bildaufnahmelement, wie sie in Videokameras oder Digitalkameras zu finden sind, gut geeignet. Zur scharfen Abbildung auf der Sensorfläche ist ein Objektiv vorgesehen. Die Daten werden durch eine Vorrichtung in ebene Vektoren umgewandelt, wobei nur die Daten jener Sensorflächenpositionen von Bedeutung sind, die durch die Lichtschnitte (beleuchtete Konturteile) repräsentiert sind. Eine rechnerunterstütze Bildananalyse (z.B. Farbwert- oder Helligkeitswertzuordnung) erlaubt die Extraktion der erfassten Lichtschnitt-Daten.

Für die Datenverarbeitung sind einfache Microcontroller oder Mikroprozessoren und Speicher wie RAM, EPROM, EEPROM vorgesehen.

Die Software zur Datenverarbeitung mit den verschiedenen Rechen- und Ermittlungsalgorithmen ist in Festspeichern vorgesehen. Die Datenverarbeitungseinheit steht mit Ein- und Ausgabevorrichtungen, wie seriellen oder parallelen Schnittstellen, Display, Schalter, und dem Videosignal in Verbindung. Ein Algorithmus dient der Lichtschnittberechnung. Ein weiterer Algorithmus kann zur Kalibrierung des Lichtschnittverfahrens dienen. Die Haupt-Algorithmen ermitteln durch Raumbezugsetzung der erfassten Schnitte in definierte Objekte und/oder durch Koordinatentransformation die Projektionslage der Vorzugsschnittfläche, wobei Informationen über Formeigenschaften den Algorithmus bestimmen können. So kann ein Gitterpunktmodell oder ein Vektorgrafikmodell eines Idealkörpers vorliegen, dessen Oberfläche für eine Einpassroutine mit geringster Abweichung dient. Dadurch kann auch die Lage von Bruchstücken eines in groben Zügen bekannten Körpers anhand erfasster Konturen bestmöglich zugeordnet werden.

Interpolation durch Kurven 1. oder höherer Ordnung ermöglicht die Ermittlung von Konturteilen, welche zwischen den erfassten Konturteilen liegen. Ein ähnlicher Ansatz ist durch den Algorithmus gegeben, der aufgrund bekannter, vorzugsweise zylindrischer oder rotationssymmetrischer Formeigenschaften oder aufgrund gespeicherter Referenzdaten der Sollkontur der Vorzugsschnittebene die Konturteile der Vorzugsschnittfläche ermittelt. Dabei wird die Projektionsebene für die erfassten Konturteile so lange um zwei zueinander orthogonale Dreh-Achsen gedreht, bis die projizierten Konturteile geringste Fehler gegenüber den Formeigenschaften oder den Referenzdaten der Kontur der Vorzugsschnittfläche aufweisen.

Auch das Zusammenfügen mehrerer Konturteile durch mehrere Messungen ist durch einen Multimode-Algorithmus vorgesehen. Dadurch kann die Vorzugskontur sukzessive ermittelt werden, indem die Vorrichtung zur Konturerfassung um das Messobjekt bewegt wird. So kann auch bei Verdeckungen oder für eine Messposition mit zu großem Umfangswinkel eine größere Teilkontur oder die gesamte Kontur der Vorzugsschnittfläche ermittelt werden.

Ein weiterer möglicher und sinnvoller Algorithmus ist die Referenzdatenerfassung, welcher aus Referenz-Objekten die Kontur der Vorzugsschnittfläche aufnimmt und als neue Referenz für spätere Messungen speichert. Taster, Schalter oder andere Bedienelemente, z.B. ein Touchscreen, sind für die Wahl der Funktionen (Algorithmen) vorgesehen. Mindestens eine Schnittstelle ermöglicht den Datenaustausch mit peripheren Computern oder anderen Messgeräten oder den Anschluss eines Druckers oder eines Monitors. Gut geeignet sind drahtlose Schnittstellen, wie Infrarot-Schnittstellen oder Funkübertragungsstrecken (z.B. Bluetooth).

Eine Vorrichtung, die im erfindungsgemäßen Verfahren einsetzbar ist, ist anhand der Zeichnung näher erläutert. Es zeigen:

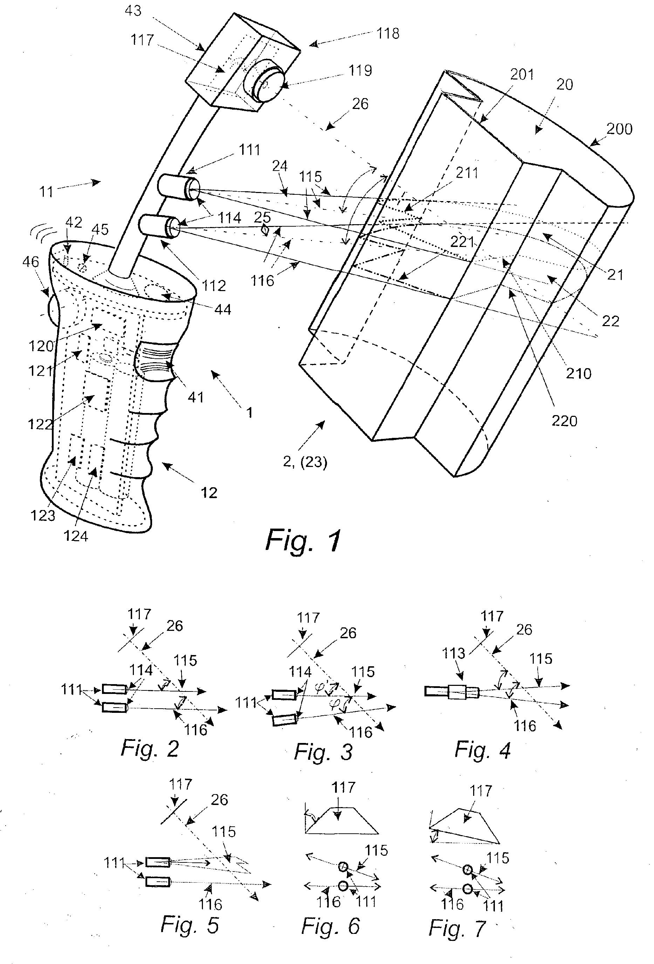

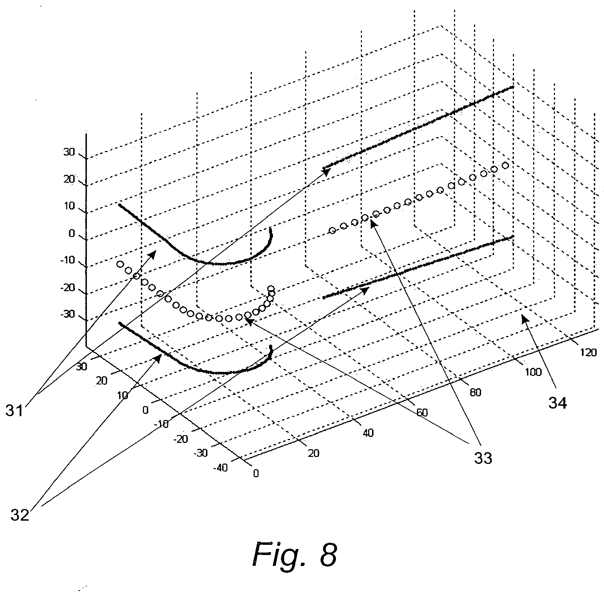

Fig. 1 eine schematisierte Darstellung der Vorrichtung, Fig. 2 bis Fig. 7 die möglichen Lagen zweier Lichtschnitt-Ebenen gegeneinander und gegenüber der Sensorebene, und Fig. 8 ein Sensorflächenbild.

Zur Ermittlung der in einer Vorzugsschnittfläche 20 liegenden Querschnittsflächenform eines zu vermessenden Körpers 2 - auch Messobjekt genannt - dient die Vorrichtung 11, die ein Laser-Lichtschnittsystem verkörpert.

Die Vorrichtung weist zwei Strahlenform-Einrichtungen 114 zur Erzeugung einer ersten und einer zweiten Strahlenfläche 115 und 116 - gebildet von Laserstrahlen, die von zwei Lichtquellen 114 erzeugt werden - auf. Die Einrichtungen 114 und damit die Strahlenflächen 115, 116 sind in einer bestimmten Raumorientierung zueinander ausgerichtet, z.B. parallel zueinander oder in einem bestimmten Winkel gegeneinander geneigt. Die Strahlenschnittlinien 115, 116 bilden hierdurch eine erste und zweite Schnittfläche 21 und 22. Gegen den Körper 2 gerichtet ergeben sich hierdurch Strahlenschnittlinien, die jeweils einen Konturteil 211 und 221 des Körpers 2 erfassen.

Das Anvisieren des Körpers 2 erfolgt von Hand aus, d.h. ohne bestimmte räumliche Orientierung, jedoch innerhalb eines bestimmten Messbereiches des Körpers 2, in welchem Messbereich der Körper 2 eine Form aufweist, die einer bekannten Gesetzmäßigkeit folgt.

Das Lichtschnittverfahren ermöglicht eine genaue Auswertung der erfassten, jedoch von der Zielkontur, d.h. der in der Verzugs-Schnittfläche 20 liegenden Kontur, abweichenden Konturteile 211 und 221.

Als Strahlendetektor ist ein Bildaufnahmelement, ausgebildet als Flächenkamera 118 mit ihrer optischen Achse 26, dargestellt. Die optische Sensorfläche 117 der Kamera 118 erfasst triangulativ die beleuchteten Konturteile 211, 221 über ein Objektiv 119. Durch die Analog-Digital-Umwandlungs-Einrichtung 120 werden digitale Bildpunkt-Daten erzeugt.

Eine Verarbeitungs- und Auswertevorrichtung 12 dient der mathematischen Verknüpfung der Daten der Konturteile 211, 221 mit gespeicherten Objekt-Formeigenschaften oder -Formdaten. Durch geeignete Algorithmen wird ein Konturteil 201 der Kontur 200, der in der Vorzugsschnittfläche 20 liegt, ermittelt und durch Vergleich mit gespeicherten Solldaten ausgewertet.

Mit Hilfe der Datenverarbeitungsvorrichtung 12 (mit einem Bildspeicher 121, einem Mikroprozessor 122, einem dynamischen Speicher 123 (RAM), einem statischen Speicher (ROM, CD ROM, PROM, ...) 124 für Bild-, Programm- und Arbeitsdaten und Ein- und mit Ausgabevorrichtungen) werden die erfassten und ermittelten Konturteile 211 und 221 ausgewertet und gespeichert und beispielsweise Abweichungen durch Informationen an einem Display 43, akustische 44 und optische 45 Signalisierungseinrichtungen ausgegeben. Hier ist als Betätigungseinrichtung 41 ein Taster zum Starten eines über einen Drehschalter 46 wählbaren Algorithmus gezeigt. So kann eine Vorzugskonturteilermittlung- und Auswertung, das Laden von Referenz- oder Programmdaten über eine Datenschnittstelle 42, Kalibrierung, Multikonturteilermittlung (zum Aufsummieren von mehreren Einzelmessungen), Ausgabe von Daten über die Datenschnittstelle 42 oder die Referenzvorzugskonturerfassung gewählt werden.

In Fig. 2 ist eine parallele Anordnung der Strahlenflächen 115, 116 gezeigt.

Fig. 3 zeigt eine der Strahlenflächen 116 um einen Winkel $\varphi$ gegen die optische Achse 26 geneigt, der sich vom Winkel $\varphi'$ zwischen der Strahlenfläche 115 und der optischen Achse 26 unterscheidet. Fig. 4 zeigt zwei durch eine Strahlenteilvorrichtung 113 geteilte Strahlenflächen 115, 116, in welchem Fall nur eine einzige Strahlenquelle, d.h. Lichtquelle, vorgesehen ist. Fig. 5 zeigt eine Strahlenfläche 115 um einen Winkel $\alpha$ verkippt. Fig. 6 zeigt diesen Sachverhalt bei Betrachtung in Strahlrichtung. Gemäß Fig. 7 ist zusätzlich die Sensorebene 117 um den Winkel $\beta$ gekippt. Fig. 8 zeigt das Sensorflächenbild mit den Konturteilen 31, 32 und der virtuellen Abbildung 33 der ermittelten Konturteile 201. 34 stellt die virtuelle Abbildung des Bezugs-Korrdinatensystems dar.

Bezugszeichenliste

2 zu vermessender Körper (Messobjekt)
11 Vorrichtung
12 Datenverarbeitungsvorrichtung
20 Vorzugsschnittfläche
21 erste Schnittfläche
22 zweite Schnittfläche
23 Referenzkörper
26 optische Achse
31 Sensorflächenbild des erfassten ersten Konturteiles 211
32 Sensorflächenbild des erfassten zweiten Konturteiles 221
33 virtuelle Abbildung des Konturteiles der Vorzugsschnittfläche 20
34 virtuelle Abbildung des Bezugs-Koordinatensystems
41 Betätigungseinrichtung (Taster oder dergleichen)
42 Datenschnittstelle (vorzugsweise Infrarot)
43 Display
44 akustische Signalisierungseinrichtung
45 optische Signalisierungseinrichtung
46 Drehschalter
111 erste Strahlenquelle
112 zweite Strahlenquelle
113 Strahlteil-Vorrichtung
114 Strahlform-Einrichtung
115 erste Strahlenfläche
116 zweite Strahlenfläche

117 optische Sensorebene

118 Strahlendetektor, Flächenkamera

119 Objektiv

120 Analog-Digital-Umwandlungs-Einrichtung

121 Bildspeicher

122 Mikroprozessor

123 Dynamischer Speicher

124 Statischer Speicher

200 Kontur der Vorzugsschnittfläche

201 Konturteil der Vorzugsschnittfläche

210 Kontur der ersten Schnittfläche, Strahlenschnittlinie

211 Konturteil der ersten Schnittfläche

220 Kontur der zweiten Schnittfläche, Strahlenschnittlinie

221 Konturteil der zweiten Schnittfläche

**Patentansprüche**

1. Verfahren zum berührungslosen Erfassen zumindest eines Teils einer in einer Vorzugsschnittfläche (20) liegenden Kontur (200, 201) eines Körpers (2, 23) innerhalb eines vorbestimmten Messbereiches des Körpers (2, 23), welcher Körper eine bekannte geometrische Gesetzmäßigkeit in einer Raumrichtung aufweist, die nicht in der Vorzugsschnittfläche liegt, vorzugsweise senkrecht zur Vorzugsschnittfläche gerichtet ist, insbesondere zum Erfassen eines Teils eines Querschnitts eines Körpers (2, 23), wobei der Körper ein sich bewegender und/oder unter Belastung stehender Körper ist und die Kombination folgender Merkmale ausgeführt wird:

   - Anvisieren des Körpers (2, 23) von Hand aus mit mindestens zwei von einer vom Körper ortsunabhängigen Strahlenquelle (111, 112) erzeugten Strahlenflächen (115, 116) unter Erzeugen jeweils einer Strahlenschnittlinie (210, 220) an der Oberfläche des Körpers (2, 23) in dem vorbestimmten Messbereich,
   - welche Strahlenflächen (115, 116) in bekannter Raumorientierung zueinander stehen,
   - Erfassen der Strahlenschnittlinien (210, 220) mittels eines Strahlendetektors (118), der zu den Strahlenflächen (115, 116) ebenfalls in einer bekannten Raumorientierung steht,
   - worauf die vom Strahlendetektor (118) erfassten Schnittliniendaten zur Errechnung der in der gewünschten Vorzugsschnittfläche (20) liegenden Kontur (200, 201) verwertet werden,
   - wobei die im Messbereich des Körpers (2, 23) auftretende Gesetzmäßigkeit seiner Oberfläche bei der Errechnung der in der gewünschten Vorzugsschnittfläche liegenden Kontur (200, 201) berücksichtigt wird.

2. Verfahren nach Anspruch 1, wobei für die Errechnung der in der Vorzugsschnittfläche (20) liegenden Kontur (200, 201) ein Algorithmus zur Berechnung und Speicherung räumlicher Datenwerte, insbesondere Datentripel sowie Punktvektoren im 3D-Raum, der Strahlenschnittlinien (210, 220) aus den Positionen von digitalisierten zweidimensionalen Abbildern der Konturteile auf einer Sensorfläche (117) des Strahlendetektors (118) mit einer Vielzahl an Pixel und den Konturpositionen $(u_{i1}, v_{i1})$, $(u_{i2}, v_{i2})$, ... mithilfe eines Mikroprozessors (122) und den trigonometrischen Lage- und Winkelbeziehungen zwischen der optischen Achse (26) des Strahlendetektors (118) und den von den Strahlenflächen gebildeten Schnittflächen (24, 25) eingesetzt wird.

3. Verfahren nach Anspruch 1 oder 2, wobei ein Algorithmus zur Korrektur verzerrt erfasster Strahlenschnittlinien (210, 220) unter Verwendung von Kalibrierdaten eingesetzt wird, wobei vorzugsweise zuvor über einen Kalibriervorgang mithilfe eines Referenzkörpers (23) Konturdaten erfasst und in einem Speichermedium (124) als Referenzdaten $(x_{i1ref}, y_{i1ref}, z_{i1ref})$, $(x_{i2ref}, y_{i2ref}, z_{i2ref})$, ... gespeichert werden.

4. Verfahren nach Anspruch 3, wobei ein Einpass-Algorithmus vorgesehen ist, der durch Vektorverschiebung der erfassten Konturteile (211, 221) und deren Rotation um zwei zueinander normale Rotationsachsen möglichst viele Konturpunkte mit möglichst vielen Punkten eines Gitterpunktmodells oder eines als Vektorgrafik in Vorzugslage vorliegenden Referenzkörpers, beispielsweise mit einer in der x-Ebene liegenden Vorzugsschnittfläche (20), möglichst in Deckung bringt, dadurch die Lage der Konturteile zum Referenzkörper (23) berechnet und in Folge die wahrscheinliche Konturteilform in der Vorzugsschnittfläche (20), die beispielsweise in der Ebene y=0 liegt, aus der Änderung der erfassten Konturteile normal zur Vorzugsschnittfläche (20) linear oder durch Kurven höherer Ordnung annähert und die daraus ermittelten Schnittpunkte mit der Vorzugsschnittfläche (20) speichert oder ausgibt und/oder mit den Gitterpunktmodelldaten oder den Vektoren der Vorzugsschnittfläche (20), beispielsweise für y=0, vergleicht

**EP 1 901 033 B1**

und die Differenzen auswertet und speichert oder ausgibt.

5. Verfahren nach einem oder mehreren der Ansprüche 2 bis 4, wobei über eine optische Sensorfläche (117) die Bildpunkte einer Bildebene mit den Achsen u und v aufgrund der Geometrie-Anordnung mindestens zweier Strahlen-Schnittflächen (21, 22) über gleich viele Matrizen (Ml, M2, ...) den Raumpunkten eines kartesischen Koordinaten-Systems (x, y, z) jeweils eindeutig zugeordnet werden und durch die Selektionen der Strahlenschnittlinien Körperkonturteile (211, 221) zugeordnet werden, sodass gilt:

$$S_1 \begin{bmatrix} x \\ y \\ z \\ 1 \end{bmatrix} = \underline{M}_1 \begin{bmatrix} u \\ v \\ 1 \end{bmatrix} ; \quad S_2 \begin{bmatrix} x \\ y \\ z \\ 1 \end{bmatrix} = \underline{M}_2 \begin{bmatrix} u \\ v \\ 1 \end{bmatrix} ; ...$$

und wobei aus den daraus errechneten Körperkonturteilen (211, 221) $(x_{i1}, y_{i1}, z_{i1})$; $(x_{i2}, y_{i2}, z_{i2})$ ... mit einer Anzahl von n Punkten über eine durch bekannte Objektformeigenschaften und aus den errechneten Körperkonturteildaten bestimmte Transformationsfunktion der Vorzugsschnittflächenkonturteil $(x_i{}', y_i{}', z_i{}')$ (201)

$$S \begin{bmatrix} x' \\ y' \\ z' \\ 1 \end{bmatrix} = \underline{N} \begin{bmatrix} x_1 \\ y_1 \\ z_1 \\ 1 \end{bmatrix}$$

bestimmt wird.

6. Verfahren nach einem der Ansprüche 1 bis 5, wobei die Strahlenflächen (115, 116) als Ebenen ausgebildet sind.

7. Verfahren nach einem der Ansprüche 1 bis 6, wobei als Strahlenquelle (111, 112) eine Lichtquelle, insbesondere eine Laserlichtquelle, eingesetzt wird.

8. Verfahren nach einem der Ansprüche 1 bis 7, wobei die Errechnung der in einer gewünschten Vorzugsschnittfläche (20) liegenden Kontur (200, 201) aufgrund der Schnittliniendaten mit Hilfe einer Triangulation durchgeführt wird.

9. Verfahren nach einem oder mehreren der Ansprüche 1 bis 8, wobei für das Erfassen einer Kontur (200), welche in Folge von Verdeckungen oder zu großem Umfangswinkel nicht von einer Position erfasst werden kann, der Körper (2, 23) innerhalb des Messbereiches von zwei oder mehr Stellen im Raum anvisiert wird, welche Stellen durch Translation und/oder Rotation der Strahlenquelle (111, 112) entlang bzw. um den Körper (2, 23) erreicht werden, und wobei die vom Strahlendetektor (118) erfassten Schnittliniendaten unter Nutzung von Überlappungsbereichen an markanten Merkmalen der Strahlenschnittlinien (210, 220) zu einer Kontur rechnerisch mittels mathematischer Transformation zusammengefügt werden, wie durch eine Translation und/oder Rotation.

**Claims**

1. A method for the contactless detection of at least a part of a contour (200, 201) of a body (2, 23) located in a preferential sectional area (20) within a predetermined measuring range of the body (2, 23), said body exhibiting a known geometric regularity in a spatial direction not located in the preferential sectional area, preferably being oriented perpendicular to the preferential sectional area, in particular for detecting a part of a cross-section of a body (2, 23),

wherein the body is a moving body and/or a body under stress and the combination of the following features is implemented:

- targeting the body (2, 23) by hand with at least two beam areas (115, 116) generated by a radiation source

8

(111, 112) spatially independent of the body, thereby generating in each case one beam intersection line (210, 220) on the surface of the body (2, 23) in the predetermined measuring range,

- which beam areas (115, 116) are in a known spatial orientation toward each other,

- detecting the beam intersection lines (210, 220) by means of a radiation detector (118), which is also in a known spatial orientation toward the beam areas (115, 116),

- whereupon the intersection line data detected by the radiation detector (118) are utilized for calculating the contour (200, 201) located in the desired preferential sectional area (20),

- wherein the regularity of the surface of the body (2, 23) occurring in the measuring range thereof is taken into account for calculating the contour (200, 201) located in the preferential sectional area.

2. A method according to claim 1, wherein, for calculating the contour (200, 201) located in the preferential sectional area (20), an algorithm is used for calculating and storing spatial data values, in particular data triplets as well as point vectors in the 3D space, of the beam intersection lines (210, 220) from the positions of digitized two-dimensional images of the contour parts on a sensor surface (117) of the radiation detector (118) with a plurality of pixels and the contour positions $(u_{i1}, v_{i1})$, $(u_{i2}, v_{i2})$, ..., using a microprocessor (122) and the trigonometric positional and angular relationships between the optical axis (26) of the radiation detector (118) and the sectional areas (24, 25) formed by the beam areas.

3. A method according to claim 1 or 2, wherein an algorithm is used for correcting beam intersection lines (210, 220) detected to be distorted, using calibration data, wherein contour data are preferably detected via a calibration process by means of a reference body (23) beforehand and are stored as reference data $(x_{i1ref}, y_{i1ref}, Z_{i1ref})$, $(x_{i2ref}, y_{i2ref}, z_{i2ref})$, ... in a storage medium (124).

4. A method according to claim 3, wherein a single-pass algorithm is provided which, by vector displacement of the detected contour parts (211, 221) and their rotation about two mutually normal rotational axes, brings as many contour points as possible into alignment, if possible, with as many points of a grid point model or of a reference body as possible, which reference body is provided as a vector graphic in a preferred position, for example, with a preferential sectional area (20) lying in the x-plane, thereby calculating the position of the contour parts relative to the reference body (23) and, subsequently, approximating the likely contour part shape in the preferential sectional area (20), which lies, for example, in the plane y=0, from the modification of the detected contour parts normal to the preferential sectional area (20) linearly or by higher-order curves and storing the intersection points determined therefrom with the preferential sectional area (20) or outputting them and/or comparing them to the grid point model data or the vectors of the preferential sectional area (20), for example, for y=0, and evaluating the differences and storing or outputting them.

5. A method according to one or several of claims 2 to 4, wherein, via an optical sensor surface (117), the image points of an image plane with the axes u and v due to the arrangement of the geometry of at least two beam intersections (21, 22) over the same number of matrices ($\underline{M}$1, M2, ...) are, in each case, clearly assigned to the spatial points of a Cartesian coordinate system (x, y, z) and, via the selections of the beam intersection lines, are assigned to body contour parts (211, 221) so that the following applies:

$$S_1 \begin{bmatrix} x \\ y \\ z \\ 1 \end{bmatrix} = \underline{M}_1 \begin{bmatrix} u \\ v \\ 1 \end{bmatrix}; \quad S_2 \begin{bmatrix} x \\ y \\ z \\ 1 \end{bmatrix} = \underline{M}_2 \begin{bmatrix} u \\ v \\ 1 \end{bmatrix};...$$

and wherein, from the body contour parts (211, 221) $(x_{i1}, y_{i1}, z_{i1})$; $(x_{i2}, y_{i2}, z_{i2})$ ... calculated therefrom with a number of n points, the preferential sectional area contour part $(x_i', y_i', z_i')$ (201)

$$S \begin{bmatrix} x' \\ y' \\ z' \\ 1 \end{bmatrix} = \underline{N} \begin{bmatrix} x_1 \\ y_1 \\ z_1 \\ 1 \end{bmatrix}$$

is determined via a transformation function determined on the basis of known object shape properties and from the calculated body contour part data.

6. A method according to any of claims 1 to 5, wherein the beam areas (115, 116) are formed as planes.

7. A method according to any of claims 1 to 6, wherein a light source, particularly a laser light source, is used as the radiation source (111, 112).

8. A method according to any of claims 1 to 7, wherein the calculation of the contour (200, 201) located in a desired preferential sectional area (20) is performed based on the intersection line data by means of a triangulation.

9. A method according to one or several of claims 1 to 8, wherein, for detecting a contour (200) which, as a result of occlusions or a circumferential angle which is too large, cannot be detected from one position, the body (2, 23) is targeted within the measuring range from two or more positions in space, which positions are reached by a translation and/or rotation of the radiation source (111, 112) along or, respectively, around the body (2, 23), and wherein the intersection line data detected by the radiation detector (118) are computationally assembled into a contour by means of a mathematical transformation, such as by a translation and/or rotation, utilizing overlap areas on distinctive features of the beam intersection lines (210, 220).

**Revendications**

1. Procédé pour la détection sans contact d'au moins une partie d'un contour (200, 201) d'un corps (2, 23) situé dans une face de coupe préférée (20) à l'intérieur d'une zone de mesure prédéterminée du corps (2, 23), corps qui présente une conformité à une loi géométrique connue dans une direction de l'espace, qui ne se situe pas dans la face de coupe préférée et est de préférence orientée perpendiculairement à la face de coupe préférée, en particulier pour détecter une partie d'une section transversale d'un corps (2, 23), dans lequel le corps est un corps qui se déplace et/ou qui est stationnaire sous charge et on exécute la combinaison des caractéristiques suivantes :

   - viser le corps (2, 23) à la main à partir d'au moins deux faces de rayonnement (115, 116) produites par une source de rayonnement (111, 112) localement indépendante du corps avec production d'une ligne de coupe de rayonnement respective (210, 220) sur la surface du corps (2, 23) dans la zone de mesure prédéterminée,
   - faces de rayonnement (115, 116) qui se trouvent avec une orientation spatiale connue l'une par rapport à l'autre,
   - détecter les lignes de coupe de rayonnement (210, 220) au moyen d'un détecteur de rayonnement (118), qui se trouve également avec une orientation spatiale connue,
   - on évalue ensuite les données de lignes de coupe détectées par le détecteur de rayonnement (118) pour le calcul du contour (200, 201) situé dans la face de coupe préférée désirée (20),
   - dans lequel on tient compte de la conformité à une loi de sa surface réalisée dans la zone de mesure du corps (2, 23) lors du calcul du contour (200, 201) situé dans la face de coupe préférée désirée.

2. Procédé selon la revendication 1, dans lequel on utilise, pour le calcul du contour (200, 201) situé dans la face de coupe préférée (20), un algorithme pour le calcul et le stockage de valeurs de données spatiales, en particulier d'un triplet de données ainsi que de vecteurs ponctuels dans l'espace 3D, des lignes de coupe de rayonnement (210, 220) à partir des positions d'images bidimensionnelles numérisées des parties de contour sur une face de détecteur (117) du détecteur de rayonnement (118) avec une multiplicité de pixels et des positions de contour ($u_{i1}$, $v_{i1}$), ($u_{i2}$, $v_{i2}$),... à l'aide d'un microprocesseur (122) et des relations trigonométriques de position et d'angle entre l'axe optique (26) du détecteur de rayonnement (118) et les faces de coupe (24, 25) formées par les faces de rayonnement.

3. Procédé selon la revendication 1 ou 2, dans lequel on utilise un algorithme pour la correction de lignes de coupe de rayonnement détectées de façon déformée (210, 220) avec utilisation de données de calibrage, dans lequel, de préférence préalablement au moyen d'une opération de calibrage à l'aide d'un corps de référence (23), on détecte des données de contour et on les stocke dans un support de mémoire (124) en tant que données de référence $(x_{i1ref}, y_{i1ref}, z_{i1ref}), (x_{i2ref}, y_{i2ref}, Zi2ref),....$

4. Procédé selon la revendication 3, dans lequel il est prévu un algorithme approprié, qui met autant que possible en recouvrement, par glissement vectoriel des parties de contour détectées (211, 221) et leur rotation autour de deux axes de rotation normaux l'un à l'autre, le plus possible de points du contour avec le plus possible de points d'un modèle de grille ou d'un corps de référence présent comme graphique vectoriel en position préférée, par exemple avec une face de coupe préférée (20) située dans le plan x, on calcule ainsi la position des parties de contour par rapport au corps de référence (23) et on approche ensuite la forme probable de la partie de contour dans la face de coupe préférée (20), qui se trouve par exemple dans le plan y=0, à partir de la variation des parties de contour détectées normalement à la face de coupe préférée (20) de façon linéaire ou par des courbes d'ordre plus élevé, et on mémorise ou on affiche les points de coupe déterminés à partir de celle-là et/ou on les compare aux données du modèle de points de grille ou aux vecteurs de la face de coupe préférée (20), par exemple pour y=0, et on évalue et on stocke ou on affiche les différences.

5. Procédé selon une ou plusieurs des revendications 2 à 4, dans lequel on associe chaque fois clairement, par une face de détecteur optique (117), les points image d'un plan image avec les axes u et v sur la base de la disposition géométrique d'au moins deux faces de coupe de rayonnement (21, 22) par des matrices en nombre égal (MI, M2, ...) aux points spatiaux d'un système de coordonnées cartésien (x, y, z) et on associe des parties de contour de corps (211, 221) par les sélections des lignes de coupe de rayonnement, de telle manière que l'on ait :

$$S_1 \begin{pmatrix} x \\ y \\ z \\ 1 \end{pmatrix} = \underline{M_1} \begin{pmatrix} u \\ v \\ 1 \end{pmatrix} \; ; \; S_2 \begin{pmatrix} x \\ y \\ z \\ 1 \end{pmatrix} = \underline{M_2} \begin{pmatrix} u \\ v \\ 1 \end{pmatrix} \; ; ...$$

et dans lequel on détermine, à partir des parties de contour de corps (211, 221)$(x_{i1}, y_{i1}, z_{i1}); (x_{i2}, y_{i2}, z_{i2})$ ... calculées à partir de celles-là avec un nombre de n points au moyen d'une fonction de transformation déterminée par des propriétés de forme connues de l'objet et à partir des données de parties de contour du corps calculées, la forme de face de coupe préférée $(xi', yi', zi')$ (201)

$$S \begin{pmatrix} x\prime \\ y\prime \\ z\prime \\ 1 \end{pmatrix} = \underline{N} \begin{pmatrix} x_1 \\ y_1 \\ z_1 \\ 1 \end{pmatrix}.$$

6. Procédé selon l'une quelconque des revendications 1 à 5, dans lequel les faces de rayonnement (115, 116) sont réalisées en forme de plans.

7. Procédé selon l'une quelconque des revendications 1 à 6, dans lequel on utilise une source de lumière, en particulier une source de lumière laser, comme source de rayonnement (111, 112).

8. Procédé selon l'une quelconque des revendications 1 à 7, dans lequel on effectue le calcul du contour (200, 201) situé dans une face de coupe préférée désirée (20) sur la base des données de lignes de coupe à l'aide d'une triangulation.

9. Procédé selon une ou plusieurs des revendications 1 à 8, dans lequel, pour la détection d'un contour (200), qui ne peut pas être détecté à partir d'une position à la suite de recouvrements ou d'un angle périphérique trop grand, on vise le corps (2, 23) à l'intérieur de la zone de mesure à partir de deux ou plusieurs points de l'espace, points qui sont atteints par translation et/ou rotation de la source de rayonnement (111, 112) le long ou autour du corps (2, 23), et dans lequel les données de lignes de coupe détectées par le détecteur de rayonnement (118) sont réunies en un contour par le calcul au moyen d'une transformation mathématique, comme par une translation et/ou une rotation, en utilisant des zones de recouvrement à des caractéristiques marquantes des lignes de coupe de rayonnement (210, 220).

Fig. 1

Fig. 2

Fig. 3

Fig. 4

Fig. 5

Fig. 6

Fig. 7

*Fig. 8*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19926439 C1
- DE 10256122
- DE 10301903
- US 6768551 B
- US 20030160974 A1
- EP 1111334 A1
- US 6542249 B1
- US 20010028025 A1
- US 6330523 B1